(19) Europäisches Patentamt
European Patent Office
Office européen des brevets

(11) Veröffentlichungsnummer: **0 257 517 B1**

(12) **EUROPÄISCHE PATENTSCHRIFT**

(45) Veröffentlichungstag der Patentschrift: **30.12.92**

(21) Anmeldenummer: **87111931.9**

(22) Anmeldetag: **18.08.87**

Die Akte enthält technische Angaben, die nach dem Eingang der Anmeldung eingereicht wurden und die nicht in dieser Patentschrift enthalten sind.

(51) Int. Cl.5: **C08L 59/00**, C08L 75/04, C08K 3/34, //(C08L59/00,75:04), (C08L75/04,59:00)

(54) **Formmassen aus Polyoymethylen-homo- und/oder -copolymerisaten und thermoplastischen Polyurethan-Elastomeren mit verbesserter Temperaturbeständigkeit, Verfahren zu deren Herstellung und deren Verwendung.**

(30) Priorität: **22.08.86 DE 3628559**

(43) Veröffentlichungstag der Anmeldung: **02.03.88 Patentblatt 88/09**

(45) Bekanntmachung des Hinweises auf die Patenterteilung: **30.12.92 Patentblatt 92/53**

(84) Benannte Vertragsstaaten: **BE DE ES FR GB IT NL SE**

(56) Entgegenhaltungen:
**US-A- 4 517 319**

**WPI, FILE SUPPLIER, An Nr. 79-53568B, Derwent Publications Ltd, London, GB; & JP-A-54 072 253 (M(TSUBISHI CHEM. IND. K.K.) 09-06-1979**

(73) Patentinhaber: **BASF Aktiengesellschaft**
**Carl-Bosch-Strasse 38**
**W-6700 Ludwigshafen(DE)**

(72) Erfinder: **Goerrissen, Heiner, Dr.**
**Berner Weg 24**
**W-6700 Ludwigshafen(DE)**
Erfinder: **Saenger, Dietrich**
**Lorcher Ring 16 a**
**W-6710 Frankenthal(DE)**
Erfinder: **Schuette, Wilhelm, Dr.**
**Frankstrasse 5**
**W-6720 Speyer(DE)**
Erfinder: **Walter, Manfred, Dr.**
**Hans-Purrmann-Allee 18**
**W-6720 Speyer(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Thermoplastisch verarbeitbare Formmassen auf der Grundlage von hochmolekularen Polyoxymethylenen - im folgenden abgekürzt POM genannt - und thermoplastischen Polyurethan-Elastomeren - abgekürzt TPU genannt - sind bekannt und werden beispielsweise beschrieben in der DE-A-1 193 240 (GB-A-1 017 244), DE-A-20 51 028, EP-A-0 116 456 und EP-A-0 117 664.

Formkörper aus derartigen Formmassen besitzen eine hohe Reißfestigkeit, außerordentliche Zähigkeit und Druckfestigkeit.

Zur Verbesserung der Kerbschlagzähigkeit werden nach Angaben der DE-A-33 03 760 (US-A-4 517 319) in Gemische aus POM und TPU mit einer Shore-Härte A von höchstens 90 Füllstoffe mit einer mittleren Teilchengröße von weniger als 10 µm einverleibt. Als geeignete Füllstoffe werden u.a. beispielhaft genannt: Oxide, wie z.B. Magnesium-, Zink-, Aluminium- und Titandioxid, mit Silanen modifiziertes Siliciumdioxid, Hydroxide wie z.B. Calcium- oder Aluminiumhydroxid, Carbonate wie z.B. Magnesium-, Calcium- oder Zinkcarbonat, Silikate, wie z.B. Asbestmineralien, Glimmer, Feldspäte, Wollastonit, Talkum, Zeolithe und feinteilige Gläser, Sulfate wie z.B. Calcium- oder Bariumsulfat, Phosphate, wie z.B. Tricalciumphosphat, Fluorapatit und Phosphorit, Sulfide wie z.B. Zink-, Cadmiumsulfid oder Schwermetallsulfide sowie Ruß und Graphit.

Aus der DE-A-1 208 490 (GB-A-999 422) ist außerdem bekannt, POM, die Metalle, Metalloxide, Metallcarbonate, Metallsilikate, Kohlenstoff, Kieselsäure und/oder Bor und gegebenenfalls Glas- und Asbestfasern enthalten, zum Herstellen von Verbundmaterialien zu verwenden.

Die bekannten POM-TPU-Gemische bzw. POM zeichnen sich durch gute mechanische Eigenschaften, beispielsweise elektrische Eigenschaften, Zähigkeit und Abriebfestigkeit, aus. Bekannte POM-TPU-Mischungen besitzen jedoch für einige Anwendungen eine nicht ausreichende thermische Stabilität, die die Verarbeitung zu Formkörpern nachteilig beeinflußt und beispielsweise zu Ablagerungen am Formwerkzeug oder zur Verschlechterung der Entformbarkeit beitragen und/oder beim späteren Gebrauch der Formkörper zu Verfärbungen und einer Verminderung der mechanischen Eigenschaften führt. Nachteilig ist ferner, daß die Mischungen noch Formaldehydaddukte enthalten können, welche bei der Verarbeitung bei erhöhten Temperaturen durch Formaldehydabspaltung zu Geruchsbelästungen führen können.

Die Aufgabe der vorliegenden Erfindung bestand darin, die Thermostabilität von POM-TPU-Mischungen zu verbessern und die Verfärbungsneigung zu verringern sowie gleichzeitig einen eventuell vorhandenen Restformaldehydgehalt zu minimieren.

Diese Aufgabe konnte überraschenderweise durch den Zusatz speziell ausgewählter Additive gelöst werden.

Gegenstand der Erfindung sind somit Formmassen aus

(A) mindestens einem Polyoxymethylen-homo- und/oder -copolymerisat,

(B) mindestens einem thermoplastischen Polyurethan-Elastomeren und

(C) gegebenenfalls Zusatzstoffen

die enthalten als

(D) Additiv zur Verbesserung der Temperaturbeständigkeit mindestens ein Erdalkalisilikat der Formel

$$MeO \cdot x\ SiO_2 \cdot n\ H_2O,$$

in der bedeuten

| | |
|---|---|
| Me | ein Erdalkalimetall, vorzugsweise Calcium oder Magnesium und insbesondere Magnesium, |
| x | eine Zahl von 1,4 bis 10, vorzugsweise 1,4 bis 6 und |
| n | eine Zahl gleich oder größer als 0, |

ausgenommen Asbest, wobei in dem Erdalkalisilikat in kleineren Mengen Eisen-, Titan- oder Aluminiumionen enthalten sein können.

Gegenstände der Erfindung sind ferner ein Verfahren zur Herstellung von Formmassen nach Anspruch 1 gemäß Anspruch 9 und die Verwendung dieser Formmassen zur Herstellung von Folien oder vorzugsweise Formkörpern gemäß Anspruch 10.

Zur Erzielung einer sehr guten Thermostabilität verbunden mit einer geringen Verfärbungstendenz und minimiertem Formaldehydgehalt enthält die POM-TPU-Mischung zweckmäßigerweise 0,005 bis 2 Gew.%, vorzugsweise 0,02 bis 0,5 Gew.%, bezogen auf das Gesamtgewicht der Komponenten (A) und (B) eines oder mehrerer Erdalkalisilikate. Anwendung finden vorzugsweise Calcium- und/oder Magnesiumsilikate.

Die Additive (D) werden vorteilhafterweise in feingemahlener Form eingesetzt. Produkte mit einer durchschrittlichen Teilchengröße von kleiner als ungefähr 100 µm, vorzugsweise kleiner als 50 µm sind besonders gut geeignet.

Die vorzugsweise Anwendung findenden Calcium- und Magnesiumsilikate können beispielsweise durch die folgenden Kenndaten näher charakterisiert werden:
Gehalt an CaO bzw. MgO: 4 bis 32 Gew.%, vorzugsweise 8 bis 30 Gew.% und insbesondere 12 bis 25 Gew.%,
Verhältnis $SiO_2$:CaO bzw. $SiO_2$:MgO (mol/mol) 1,4 bis 10, vorzugsweise 1,4 bis 6 und insbesondere 1,5 bis 4,
Schüttgewicht: 10 bis 80 g/100 ml, vorzugsweise 10 bis 40 g/100 ml, durchschnittliche Korngröße: kleiner als 100 µm, vorzugsweise kleiner als 50 µm und
Glühverlust: kleiner als 40 Gew.%, vorzugsweise kleiner als 30 Gew.%,

Als Erdalkalisilikate eignen sich zur Herstellung der erfindungsgemäßen Formmassen naturgemäß auch solche Silikate, die außer Erdalkaliionen, vorzugsweise $Ca^{2+}$ und/oder $Mg^{2+}$ionen, auch noch kleinere Mengen an anderen Metallionen, beispielsweise Eisen-, Titan- oder vorzugsweise Aluminiumionen gebunden enthalten.

Zur Herstellung der erfindungsgemäßen Formmassen können die Aufbaukomponenten POM (A) und TPU (B) in breiten Mengenverhältnissen variiert werden. Besonders bewährt haben sich und daher vorzugsweise verwendet werden POM-TPU-Mischungen, die 40 bis 95 Gew.%, vorzugsweise 60 bis 90 Gew.% mindestens eines Polyoxymethylen-homo- und/oder -copolymerisats und 60 bis 5 Gew.%, vorzugsweise 40 bis 10 Gew.% mindestens eines thermoplastischen Polyurethan-Elastomeren, wobei die Gew.% bezogen sind auf das Gesamtgewicht der Aufbaukomponenten (A) und (B) enthalten.

(A) Geeignete Polyoxymethylene (A) sind Homopolymerisate des Formaldehyds oder Copolymerisate des Formaldehyds sowie des Trioxans mit cyclischen und/oder linearen Formalen, wie Butandiolformal oder Epoxiden wie Ethylen- oder Propylenoxid. Die Homopolymerisate haben in der Regel thermisch stabile Endgruppen, wie Ester- oder Ethergruppen. Die Copolymerisate des Formaldehyds oder des Trioxans weisen vorteilhaft mehr als 50 %, insbesondere mehr als 75 % Oxymethylengruppen auf. Besonders bewährt haben sich Copolymerisate, in denen mindestens 0,1 % Gruppen des Comonomeren enthalten sind, die mindestens zwei benachbarte Kohlenstoffatome in der Kette haben. Besondere technische Bedeutung haben Polyoxymethylene erlangt, die 1 bis 10 Gew.% Comonomere enthalten. Solche Copolymerisate sind in an sich bekannter Weise durch kationische Copolymerisation von Trioxan mit geeigneten Comonomeren wie cyclischen Ethern oder Acetalen, z.B. Ethylenoxid, 1,3-Dioxolan, 1,3-Dioxan, 1,3-Dioxacycloheptan oder mit linearen Oligo-oder Polyformalen, wie Polydioxolan oder Polybutandiolformal erhältlich. In der Regel haben die verwendeten Polyoxymethylene ein Molekulargewicht (Zahlenmittel) $M_n$ von 2000 bis 100.000, vorzugsweise von 10.000 bis 100.000 und einem MFI bei 190 °C, 21,17 N nach DIN 53 735 von 0,5 bis 200, vorzugsweise von 1 bis 50. Besondere Bedeutung haben Polymerisate, die aus Trioxan und 1 bis 10 Mol.% Ethylenoxid, 1,3-Dioxolan oder Butandiolformal aufgebaut sind, erlangt. Die erfindungsgemäßen Formmassen enthalten, wie bereits dargelegt wurde, zweckmäßigerweise 40 bis 95 Gew.%, bezogen auf das Gewicht der Komponenten (A) und (B), mindestens eines Polyoxymethylens.

Als zusätzliche Comonomere für Trioxan werden gegebenenfalls noch Verbindungen mit mehreren polymerisierbaren Gruppen im Molekül, z.B. Alkylglycidylformale, Polyglykoldiglycidylether, Alkandioldiglycidylether oder Bis-(alkantriol)-triformale verwendet, und zwar in einer Menge von 0,05 bis 5 Gew.%, vorzugsweise 0,1 bis 2 Gew.%, bezogen auf die Gesamtmonomermenge.

(B) Die erfindungsgemäßen Formmassen besitzen neben POM (A) als Basiskunststoff nach dem Band- oder vorzugsweise dem Extruderverfahren hergestellte thermoplastische Polyurethan-Elastomere (TPU). Geeignete TPU können beispielsweise hergestellt werden durch Umsetzung von

a) organischen, vorzugsweise aromatischen Diisocyanaten,

b) Polyhydroxylverbindungen mit Molekulargewichten von 500 bis 8000 und

c) Kettenverlängerungsmitteln mit Molekulargewichten von 60 bis 400 in Gegenwart von gegebenenfalls

d) Katalysatoren,

e) Hilfsmitteln und/oder Zusatzstoffen.

Zu den hierfür verwendbaren Ausgangsstoffen (a) bis (c), Katalysatoren (d), Hilfsmitteln und Zusatzstoffen (e) möchten wir folgendes ausführen:

a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische

aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylendiisocyanat. Vorzugsweise verwendet werden Hexamethylen-diisocyanat, Isophoron-diisocyanat, 1,5-Naphthylen-diisocyanat, Diphenylmethan-diisocyanat-Isomerengemische mit einem 4,4'-Diphenylmethan-diisocyanatgehalt von größer als 96 Gew.% und insbesondere 4,4'-Diphenylmethan-diisocyanat.

b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den oben genannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 8 000, vorzugsweise 600 bis 6 000 und insbesondere 800 bis 3 500. Sie können sowohl einzeln als auch in Form von Mischungen untereinander zu Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ε-Caprolactonen.

Als Polyesterole vorzugsweise verwendet werden Dialkylenglykol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen Molekulargewichte von 500 bis 6 000, vorzugsweise von 800 bis 3 500.

(c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di, tri- und/oder tetraalkylsubstituierte 4,4'-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1:0,85 bis 1,20, vorzugsweise 1:0,95 bis 1:1,05 und insbesondere 1:0,98 bis 1,02 beträgt.

(d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.

Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Weichmacher.

Nähere Angaben über die oben genannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Wie bereits dargelegt wurde, wird das TPU nach dem Bandverfahren oder vorzugsweise nach dem Extruderverfahren hergestellt. Im einzelnen wird beim Bandverfahren auf folgende Weise verfahren:

Die Aufbaukomponenten (a) bis (c) und gegebenenfalls (d) und/oder (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband, aufgebracht und durch eine temperierte Zone geführt. Die Reaktionstemperatur in der temperierten Zone beträgt 60 bis 200°C, vorzugsweise 100 bis 180°C und die Verweilzeit 0,05 bis 0,5 Stunden, vorzugsweise 0,1 bis 0,3 Stunden.

Nach beendeter Reaktion wird das TPU abkühlen gelassen, zerkleinert oder granuliert und zwischengelagert oder direkt mit POM (A), gegebenenfalls den Zusatzstoffen (C), und dem Additiv (D) zu den erfindungsgemäßen Formmassen verarbeitet.

Beim Extruderverfahren werden die Aufbaukomponenten (a) bis (c) und gegebenenfalls (d) und (e) einzeln oder als Gemisch in den Extruder eingeführt, bei Temperaturen von 100 bis 250°C, vorzugsweise 140 bis 220°C zur Reaktion gebracht, das erhaltene TPU extrudiert, abkühlen gelassen, granuliert und zwischengelagert oder ebenfalls direkt mit POM (A), gegebenenfalls den Zusatzstoffen (C) und dem Additiv (D) zu den erfindungsgemäßen Formmassen weiterverarbeitet.

Die erfindungsgemäßen Formmassen können neben den Komponenten (A), (B) und (D) gegebenenfalls Zusatzstoffe (C) enthalten.

Als geeignete, gegebenenfalls mitverwendbare Zusatzstoffe (C) kommen beispielsweise in Betracht: Stabilisatoren, Nukleierungsmittel, Antistatika, Licht- und Flammschutzmittel, Gleit- und Schmiermittel,

Weichmacher, Pigmente, Farbstoffe, optische Aufheller, Entformungshilfsmittel und dergleichen. Als Zusatzstoff insbesondere bewährt hat sich und daher vorzugsweise eingesetzt wird ein oder mehrere Antioxidantien mit phenolischer Struktur. Derartige Antioxidantien werden beschrieben z.B. in der DE-A-27 02 661.

Als Stabilisatoren gegen den Einfluß von Wärme eignen sich insbesondere Polyamide, Amide mehrbasiger Carbonsäuren, Amidine, z.B. Dicyandiamid, Hyrazine, Harnstoffe, Poly-(N-vinyllactame) und Erdalkalisalze von aliphatischen, vorzugsweise hydroxylgruppenhaltigen, ein- bis dreibasigen Carbonsäuren mit 2 bis 20 Kohlenstoffatomen, z.B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 bis 13, vorzugsweise 7, 8 oder 9 Kohlenstoffatome aufweisen, mit Diolen, die 2 bis 6 Kohlenstoffatome enthalten. Als Lichtstabilisatoren sind beispielsweise $\alpha$-Hydroxybenzophenonderivate und Benzotriazolderivate geeignet. Die Stabilisatoren werden zumeist in einer Menge von insgesamt 0,1 bis 5 Gew.%, vorzugsweise 0,5 bis 3 Gew.%, bezogen auf das Gewicht der Komponenten (A) und (B) verwendet.

Als Zusatzstoffe (C) können ferner verstärkend wirkende Füllstoffe, vorzugsweise Fasern, beispielsweise Kohlenstoff- oder insbesondere Glasfasern, die mit Haftvermittlern und/oder Schlichten ausgerüstet sein können, Anwendung finden.

Die Fasern, die in Mengen von 5 bis 60 Gew.%, vorzugsweise von 10 bis 50 Gew.%, bezogen auf das Gewicht der Komponenten (A) und (B) eingesetzt werden, weisen zweckmäßigerweise einen Durchmesser von 5 bis 20 µm, vorzugsweise von 8 bis 15 µm auf und besitzen im Granulat im allgemeinen eine mittlere Faserlänge von 0,05 bis 1 mm, vorzugsweise von 0,1 bis 0,5 mm.

Anstelle der Fasern, insbesondere Glasfasern, oder in Kombination mit diesen, können die erfindungsgemäßen Formmassen auch andere Füll- oder Verstärkungsmittel enthalten. Genannt seien beispielsweise Glaskugeln, Talkum, Kaolin, Wollastonit, Glimmer oder Kreide, die in Mengen von 3 bis 60 Gew.%, bezogen auf das Gewicht der Komponenten (A) und (B) verwendet werden können.

Zur Herstellung der erfindungsgemäßen Formmassen kann das Additiv (D) zunächst dem POM (A) oder dem TPU (B) oder einer Aufbaukomponente (a), (b) und/oder (c) zur Herstellung des TPU einverleibt werden. Das erhaltene Konzentrat aus Additiv (D) und POM (A) bzw. Additiv (D) und TPU (B) kann danach mit unbehandeltem TPU (B) bzw. unbehandeltem POM (A) abgemischt und auf diese Weise die Additivkonzentration in der erfindungsgemäßen Formmasse eingestellt werden. Nach einer anderen Verfahrensvariante können auch Additiv (D) enthaltende POM- und TPU-Konzentrate gemischt werden, sofern die Additivkonzentration (D) in den Konzentraten innerhalb der für die Formmasse erforderlichen Menge liegt. Nach bevorzugten Ausführungsformen werden jedoch die Aufbaukomponenten (A), (B), (D) und gegebenenfalls (C) der erfindungsgemäßen Formmassen direkt gemischt oder das Additiv (D) wird in eine vorgefertigte Mischung aus POM (A) und TPU (B) oder POM-TPU-Masse in den gewünschten Mengenverhältnissen eingebracht. Das Abmischen der Aufbaukomponenten (A), (B), (D) und gegebenenfalls (C) wird vorteilhafterweise bei Temperaturen von 0 bis 150°C, vorzugsweise von 20 bis 100°C durchgeführt. Die Einarbeitung des Additiv (D) oder Additiv(D)konzentrats in die POM-TPU-Masse oder Mischung aus POM (A) und TPU (B) erfolgt bei Temperaturen von 50 bi 260°C, vorzugsweise von 150 bis 240°C, im beispielsweise fließfähigen, erweichten oder geschmolzenen Zustand der Aufbaukomponenten (A) und (B) z.B. durch Rühren, Walzen, Kneten oder Extrudieren, beispielsweise unter Verwendung eines Doppelschnecken- oder Preßspritzmischextruders oder eines Kneters.

Nach dem zweckmäßigsten und daher vorzugsweise angewandten Herstellungsverfahren für die erfindungsgemäßen Formmassen werden die Aufbaukomponenten (A), (B), (D) und gegebenenfalls (C) in Form von vorgefertigten Mischungen oder insbesondere einzeln in einen Extruder, vorzugsweise Doppelschneckenextruder eingebracht, bei Temperaturen von 150 bis 260°C, vorzugsweise von 180 bis 240°C zusammengeschmolzen, die Schmelze extrudiert, abgekühlt und anschließend granuliert. Die erhaltenen Granulate können zwischengelagert oder direkt zur Herstellung von Formkörpern verwendet werden.

Die erfindungsgemäßen Formmassen besitzen neben guten mechanischen Eigenschaften eine deutlich verbesserte Temperaturbeständigkeit und geringere Verfärbungstendenz sowie einen verringerten Restformaldehydgehalt und eignen sich zur Herstellung von beispielsweise Folien oder vorzugsweise Formkörpern nach bekannten Techniken, z.B. durch Blasformen, Extrusion oder Spritzgießen. Die Formkörper finden beispielsweise Verwendung in der Fahrzeug-, Elektrogeräte- und Elektronikindustrie.

<u>Beispiele 1 bis 3 und Vergleichsbeispiele A bis D</u>

80 Gew.-Teile eines Polyoxymethylencopolymerisats mit ca. 3 Gew.% Butandiolformal und einem MFI = 9 g/10 min bei 190°C, 21,17 N (DIN 53 735), das als Antioxidans 0,3 Gew.% 1,6-Hexandiol-bis-3-(3,5-di-tert.butyl-4-hydroxiphenyl)-propionat und als Wärmestabilisatoren 0,1 Gew.% eines endgruppenverkappten

Polyamids (analog den Angaben der US-A-3 960 984, Beispiel 5-4) und 0,3 Gew.% eines Melamin-Formaldehyd-Polykondensates (analog den Angaben der DE-A-25 40 207, Beispiel 1) enthielt,
20 Gew.-Teile eines TPU, hergestellt durch Umsetzung von 4,4'-Diphenylmethan-diisocyanat, 1,4-Butandiol-polyadipat und 1,4-Butandiol mit einer Shore-Härte A von 85
und gegebenenfalls
0,1 Gew.-Teile Additiv (D) oder einer Vergleichssubstanz
wurden bei 23 ° C gemischt und die Mischung in einen Doppelschneckenextruder (Typ ZSK 28 der Firma Werner & Pfleiderer) eingebracht, hei 220 ° C zusammengeschmolzen, extrudiert, granuliert und das erhaltene Granulat unter vermindertem Druck bei 80 ° C 15 Stunden lang getrocknet.

Zur Prüfung der Thermostabilität und Verfärbungsneigung wurden bestimmt:

$GV_{N_2}$: Der Gewichtsverlust in Prozent einer Probe aus 2 g Granulat bei zweistündigem Erhitzen auf 220°C unter Stickstoff,

$GV_{Luft}$: Gewichtsverlust in Prozent einer Probe aus 1 g Granulat bei zweistündigem Erhitzen auf 220°C unter Luft,

Farbe: Farbe der Rückwaage nach $GV_{N_2}$.

Der Formaldehydgehalt in Granulat wurde nach folgender Methode ermittelt: Eine Probe von 100 g Granulat wird während 60 min in 150 ml Wasser am Rückfluß gekocht. Nach dieser Zeit wird das Granulat abfiltriert, 10 ml einer 0,5 N Natriumsulfitlösung mit pH 9,1 zum Wasser gegeben und mit 0,1 N Schwefelsäure bis auf pH 9,1 zurücktitriert. Der Verbrauch in ml an 0,1 N Schwefelsäure ist V (Probe). Desgleichen werden 150 ml Wasser mit 10 ml einer 0,5 N Natriumsulfitlösung (pH 9,1) vermischt und dann mit 0,1 N Schwefelsäure bzw. 0,1 N Natronlauge auf pH 9,1 zurücktitriert. Der Verbrauch in ml an Schwefelsäure bzw. Natronlauge ist $V_{Säure}$ (Nullprobe) bzw. $V_{Lauge}$ (Nullprobe).

Der Formaldehydgehalt des Granulates errechnet sich dann aus

ppm Formaldehyd = 30 [V(Probe) - $V_{Säure}$ (Nullprobe)

bzw.

ppm Formaldehyd = 30 [V(Probe) - $V_{Lauge}$ (Nullprobe).

Die verwendeten Additive (D) und Vergleichssubstanzen, die im Folgenden näher spezifiziert werden und die erhaltenen Ergebnisse sind in der Tabelle zusammengefaßt.

Spezifikation der verwendeten Additive (D) und Vergleichssubstanzen:

Ca-Silicat:

Gehalt an CaO: 14 bis 18 Gew.%,
Gehalt an $SiO_2$: 60 bis 68 Gew.%,
Schüttdichte: 15 g/100 ml
Glühverlust: 15 bis 20 Gew.%,
Durchschnittliche Korngröße: <50 µm

Mg-Trisilicat:

Gehalt an MgO: >20 Gew.%,
Gehalt an $SiO_2$: >45 Gew.%,
Verhältnis $SiO_2$:MgO = 1,5 mol/mol
Schüttdichte: 25 bis 40 g/100 ml
Durchschnittliche Korngröße: 20 bis 40 µm
Glühverlust: 20 bis 30 Gew.%

Synthetisches Mg-Silicat (= Ambosol® der Fa. Societe Nobel Bozel, Puteaux, Frankreich):

Gehalt an MgO: ≧14,8 Gew.%,

Gehalt an $SiO_2$: ≧59 Gew.%,
Verhältnis $SiO_2$:MgO = 2,7 mol/mol
Schüttdichte: 20 bis 30 g/100 ml
Glühverlust: <25 Gew.%

Talkum (3 MgO•4 $SiO_2$•n$H_2O$)

Verhältnis $SiO_2$:MgO = 1,33 mol/mol
durchschnittliche Korngröße: <20 µm
Glühverlust: <30 Gew.%

Wollastonit (CaO•$SiO_2$)

verhältnis $SiO_2$:CaO = 1 mol/mol,
durchschnittliche Korngröße: <10 µm.
Schüttdichte: 30 g/100 ml,
Gehalt an CaO: 43 Gew.%,
Gehalt an $SiO_2$:50,5 Gew.%,
Glühverlust <5 Gew.%,

Kieselgel ($SiO_2$)

durchschnittliche Korngröße: 5 µm,
Glühverlust: 5 bis 8 Gew.%,
Porenvolumen: ca. 1 $cm^3$/g

Tabelle

| Beispiele Vergleichsbeispiele | Additiv (D) | Vergleichssubstanz | $GV_{N_2}$ [Gew.%] | $GV_{Luft}$ [Gew.%] | Farbe | Formaldehyd im Granulat [ppm] |
|---|---|---|---|---|---|---|
| 1 | Calciumsilikat | - | 0,10 | 0,67 | hellbraun | 63 |
| 2 | Magnesiumtrisilikat | - | 0,10 | 0,68 | beige | 53 |
| 3 | synth. Magnesiumsilikat | - | 0,09 | 0,62 | beige | 60 |
| A | - | - | 0,78 | 1,56 | dunkelbraun | 110 |
| B | - | Kieselgel | 0,53 | 1,46 | dunkelbraun | 121 |
| C | - | Wollastonit | 0,65 | 1,74 | dunkelbraun | 109 |
| D | - | Talkum | 0,83 | 2,01 | dunkelbraun | 172 |

## Patentansprüche

**1.** Formmassen aus
(A) mindestens einem Polyoxymethylen-homo- und/oder -copolymerisat,

(B) mindestens einem thermoplastischen Polyurethan-Elastomeren und
(C) gegebenenfalls Zusatzstoffen, enthaltend als
(D) Additiv mindestens ein Erdalkalisilikat der Formel

$MeO \cdot x\ SiO_2 \cdot n\ H_2O$,

in der bedeuten
Me ein Erdalkalimetall,
x eine Zahl von 1,4 bis 10 und
n eine Zahl gleich oder größer als Null,
ausgenommen Asbest, wobei in dem Erdalkalisilikat in kleineren Mengen Eisen-, Titan- oder Aluminiumionen enthalten sein können.

**2.** Formmassen nach Anspruch 1, dadurch gekennzeichnet, daß das Erdalkalimetall Calcium oder Magnesium ist.

**3.** Formmassen nach Anspruch 1, enthaltend das Additiv (D) in einer Menge von 0,005 bis 2 Gew.%, bezogen auf das Gesamtgewicht der Komponenten (A) und (B).

**4.** Formmassen nach Anspruch 1, dadurch gekennzeichnet, daß das Additiv (D) oder die -mischung eine durchschnittliche Teilchengröße kleiner als 100 µm besitzt.

**5.** Formmassen nach Anspruch 1, enthaltend
(A) 40 bis 95 Gew.% mindestens eines Polyoxymethylen-homo- und/oder -copolymerisats und
(B) 60 bis 5 Gew.% mindestens eines thermoplastischen Polyurethan-Elastomeren, wobei die Gewichtsprozente bezogen sind auf das Gesamtgewicht der Komponenten (A) und (B).

**6.** Formmassen nach Anspruch 1, dadurch gekennzeichnet, daß die Polyoxymethylen-homo- und/oder -copolymerisate (A) ein durchschnittliches Molekulargewicht (Zahlenmittel) von 2000 bis 100.000 und einen MFI bei 190°C, 21,17 N nach DIN 53 735 von 0,5 bis 200 besitzen.

**7.** Formmassen nach Anspruch 1, dadurch gekennzeichnet, daß die thermoplastischen Polyurethan-Elastomeren (B) hergestellt werden durch Umsetzung von
(a) aromatischen Diisocyanaten, vorzugsweise 4,4'-Diphenylmethan-diisocyanat,
(b) im wesentlichen linearen Polyhydroxylverbindungen, vorzugsweise Dialkylenglykol-polyadipaten mit 2 bis 6 Kohlenstoffatomen im Alkylenrest und Molekulargewichten (Zahlenmittel) von 800 bis 3500 oder Polyoxytetramethylen-glykolen mit einem Molekulargewicht von 800 bis 3500 und
(c) Butandiol-1,4
in Gegenwart von
(d) Katalysatoren und gegebenenfalls
(e) Hilfsmitteln und/oder Zusatzstoffen,
nach dem Bandverfahren oder vorzugsweise dem Extruderverfahren.

**8.** Formmassen nach Anspruch 1, enthaltend als Zusatzstoff (C) mindestens ein Antioxidans mit phenolischer Struktur.

**9.** Verfahren zur Herstellung von Formmassen gemäß Anspruch 1, dadurch gekennzeichnet, daß man die Komponenten (A), (B) und (D) sowie gegebenenfalls (C) in einem Extruder bei Temperaturen von 150 bis 260°C zusammenschmilzt, die Schmelze extrudiert und anschließend granuliert.

**10.** Verwendung von Formmassen nach Anspruch 1 zur Herstellung von Folien oder vorzugsweise Formkörpern.

## Claims

**1.** A molding material of
(A) one or more polyoxymethylene homopolymers and/or copolymers and
(B) one or more thermoplastic polyurethane elastomers,

(C) with or without additives, containing
(D) as an additive, one or more alkaline earth metal silicates of the formula

$MeO.x\ SiO_2.n\ H_2O$

where Me is an alkaline earth metal, x is from 1.4 to 10 and n is greater than or equal to zero, with the exception of asbestos, in which case the alkaline earth metal silicate may contain small amounts of iron ions, titanium ions or aluminium ions.

**2.** A molding material as claimed in claim 1, wherein the alkaline earth metal is calcium or magnesium.

**3.** A molding material as claimed in claim 1, containing the additive (D) in an amount of from 0.005 to 2% by weight, based on the total weight of components (A) and (B).

**4.** A molding material as claimed in claim 1, wherein the additive (D) or the additive mixture has a mean particle size of less than 100 µm.

**5.** A molding material as claimed in claim 1, containing
(A) from 40 to 95% by weight of one or more polyoxymethylene homopolymers and/or copolymers and
(B) from 60 to 5% by weight of one or more thermoplastic polyurethane elastomers, the percentages being based on the total weight of components (A) and (B).

**6.** A molding material as claimed in claim 1, wherein the polyoxymethylene homopolymers and/or copolymers (A) have a mean molecular weight (number average) of from 2,000 to 100,000 and an MFI of from 0.5 to 200 at 190°C and 21.17 N according to DIN 53,735.

**7.** A molding material as claimed in claim 1, wherein the thermoplastic polyurethane elastomers (B) are prepared by reacting
(a) an aromatic diisocyanate, preferably 4,4'-diphenylmethane diisocyanate,
(b) an essentially linear polyhydroxy compound, preferably a dialkylene glycol polyadipate where alkylene is of 2 to 6 carbon atoms, having a molecular weight (number average) of from 800 to 3,500, or a polyoxytetramethylene glycol having a molecular weight of from 800 to 3,500 and
(c) butane-1,4-diol
in the presence of
(d) a catalyst and, if required,
(e) assistants and/or additives,
by the belt method or, preferably, the extruder method.

**8.** A molding material as claimed in claim 1, containing, as additive (C), one or more antioxidants having a phenolic structure.

**9.** A process for the preparation of a molding material as claimed in claim 1, wherein the components (A), (B) and (D) and, if required, (C) are melted together in an extruder at from 150 to 260°C, the melt is extruded and the extrudates are then granulated.

**10.** Use of a molding material as claimed in claim 1 for the production of films or preferably moldings.

**Revendications**

**1.** Masses à mouler, composées
(A) d'au moins un homo- et/ou un copolymère de polyoxyméthylène,
(B) d'au moins un élastomère de polyuréthane thermoplastique et
(C) éventuellement d'adjuvants,
et contenant, en tant qu'additif,
(D) au moins un silicate alcalino-terreux de formule

$MeO\ .\ x\ SiO_2\ .\ n\ H_2O,$

dans laquelle

Me représente un métal alcalino-terreux,

x est un nombre de 1,4 à 10 et

n est un nombre égal ou supérieur à 0,

à l'exclusion de l'amiante, des ions de fer, de titane ou d'aluminium pouvant être contenus en petites quantités dans le silicate alcalino-terreux.

**2.** Masses à mouler selon la revendication 1, caractérisées en ce que le métal alcalino-terreux est le calcium ou le magnésium.

**3.** Masses à mouler selon la revendication 1, contenant l'additif (D) dans une proportion de 0,005 à 2% en poids, par rapport au poids total des composants (A) et (B).

**4.** Masses à mouler selon la revendication 1, caractérisées en ce que l'additif (D) ou le mélange d'additifs a une grosseur moyenne de particules inférieure à 100 µm.

**5.** Masses à mouler selon la revendication 1, contenant

(A) de 40 à 95% en poids d'au moins un homo- et/ou un copolymère de polyoxyméthylène et

(B) de 60 à 5% en poids d'au moins un élastomère de polyuréthane thermoplastique, les pourcentages en poids étant rapportés au poids total des composants (A) et (B).

**6.** Masses à mouler selon la revendication 1, caractérisées en ce que les homo- et/ou les copolymères de polyoxyméthylène (A) ont un poids moléculaire moyen (moyenne en nombre) de 2000 à 100 000 et un MFI (à 190 ° C, 21,17 N selon la DIN 53 735) de 0,5 à 200.

**7.** Masses à mouler selon la revendication 1, caractérisées en ce que les élastomères de polyuréthane thermoplastiques (B) sont préparés par réaction

(a) de diisocyanates aromatiques, de préférence de diisocyanate de 4,4'-diphénylméthane,

(b) de composés polyhydroxylés essentiellement linéaires, de préférence de polyadipates de dialkylèneglycol à 2-6 atomes de carbone dans le reste alkylène, ayant des poids moléculaires (moyenne en nombre) de 800 à 3500, ou de polyoxytétraméthylèneglycols ayant un poids moléculaire de 800 à 3500, et

(c) de butanediol-1,4

en présence

(d) de catalyseurs et éventuellement

(e) d'adjuvants et/ou d'additifs,

selon le procédé sur bande transporteurs ou, de préférence, le procédé en extrudeuse.

**8.** Masses à mouler selon la revendication 1, contenant, comme adjuvant (C), au moins un antioxydant à structure phénolique.

**9.** Procédé de préparation de masses à mouler selon la revendication 1, caractérisé en ce qu'on fond ensemble les composants (A), (B), (D) et éventuellement (C) dans une extrudeuse à une température de 150 à 260 ° C, on extrude la masse fondue, puis on la granule.

**10.** Utilisation de masses à mouler selon la revendication 1 pour la fabrication de feuilles ou, de préférence, de corps moulés.